# FASCICULE DE BREVET EUROPEEN

(11) **EP 3 829 204 B1**
(45) Date de publication et mention de la délivrance du brevet: **12.03.2025**
(21) Numéro de dépôt: 20210219.0
(22) Date de dépôt: 27.11.2020
(51) Int. Cl.: H04W 12/06, H04L 9/08, H04W 4/70, H04W 12/069

(54) **PROCÉDÉ ET SYSTÈME DE CONTRÔLE D'ACCÈS À DES OBJETS CONNECTÉS, PROCÉDÉS ASSOCIÉS DE DISTRIBUTION ET DE RÉCEPTION DE DONNÉES, ET PRODUIT PROGRAMME D'ORDINATEUR ASSOCIÉ**
VERFAHREN UND SYSTEM ZUR STEUERUNG DES ZUGRIFFS AUF VERBUNDENE OBJEKTE, ENTSPRECHENDES VERFAHREN ZUR VERTEILUNG UND ZUM EMPFANG VON DATEN UND ENTSPRECHENDES COMPUTERPROGRAMMPRODUKT
METHOD AND SYSTEM FOR CONTROLLING ACCESS TO CONNECTED OBJECTS, ASSOCIATED METHODS FOR DISTRIBUTING AND RECEIVING DATA, AND RELATED COMPUTER PROGRAM PRODUCT

(30) Priorité: 27.11.2019 FR 1913315
(43) Date de publication de la demande: 02.06.2021
(73) Titulaire: THALES, 92400 Courbevoie (FR)
(72) Inventeur: MARTINS, Cyrille, 91767 PALAISEAU CEDEX (FR); PIATTE, Cyrille, 91767 PALAISEAU CEDEX (FR); DANGERVILLE, Cyril, 91767 PALAISEAU CÉDEX (FR)
(74) Mandataire: Lavoix

(56) Documents cités:
- CN-A- 110 266 687
- US-A1- 2019 253 243
- US-A1- 2019 297 063

## Description

La présente invention concerne un procédé de contrôle d'accès à des données issues d'une pluralité d'objets connectés.

La présente invention concerne également un procédé de distribution de données, un procédé de réception de données, et un système associé de contrôle d'accès à ces données ainsi qu'un produit programme d'ordinateur.

Le domaine de l'invention est celui des objets connectés connu dans l'état de la technique également sous le terme anglais *« Internet of Things »* (abréviation *« IoT »*) ou « *Internet des objets »* en français.

Le document US 2019/297063 A1 décrit un contrôle d'accès pour une architecture du type réseau centré sur l'information, également appelé ICS (de l'anglais « *Information Centric Networking »*)*.*

Le document CN 110 266 687 A décrit une méthode de conception d'un module de partage de données dans le cadre de l'internet des objets.

De manière connue en soi, un objet connecté représente un objet à ressources contraintes. Ces contraintes sont imposées par la nature de cet objet et/ou par le domaine de son utilisation.

Ainsi, par exemple, un tel objet présente généralement un dispositif électronique de dimensions réduites qui met en œuvre un certain nombre d'opérations à distance.

Ces opérations peuvent comprendre par exemple une observation d'un élément associé à cet objet et la transmission des données générées par rapport à cette observation à un serveur distant.

Ainsi, de manière connue en soi, un tel objet connecté comprend un module d'observation permettant alors d'observer les caractéristiques de l'élément associé, un module d'émission permettant de transmettre les données générées par exemple sous la forme des signaux radioélectriques et un module d'alimentation tel qu'une batterie permettant d'alimenter l'ensemble de ces composantes.

Compte tenu des dimensions réduites de l'objet, ces composantes sont généralement préprogrammées et leur modification pose généralement de nombreuses difficultés.

Il est également possible d'associer au module d'émission d'un tel objet, un module de traitement permettant de protéger les données issues de cet objet qui seront ensuite transmises par exemple en utilisant des signaux radioélectriques via des fréquences publiques.

La protection des données transmises comprend notamment un chiffrement de ces données.

Ainsi, les objets connectés peuvent être utilisés pour transmettre des données sensibles.

Toutefois, compte tenu des ressources contraintes de ces objets comme notamment leurs dimensions réduites et capacités énergétiques généralement limitées, la protection des données au moyen d'un chiffrement sophistiqué peut être parfois difficilement mise en œuvre.

La situation devient encore plus compliquée en cas d'une pluralité d'utilisateurs ayant droit d'accéder ou non, aux données issues de ces objets.

Notamment, il est généralement difficile de gérer les droits d'accès au niveau des objets connectés lorsque différents utilisateurs souhaitent obtenir accès aux données issues de ces objets.

La présente invention permet de contrôler de manière efficace l'accès aux données issues de différents objets connectés et cela pour une pluralité d'utilisateurs, tout en permettant une protection sûre de ces données.

En particulier, l'invention permet une gestion d'accès à ces objets dite « grain fin ».

Autrement dit, l'invention permet de contrôler l'accès aux données issues des objets connectés de manière fine en se basant notamment sur les attributs associés aux utilisateurs et cela sans surcharger les objets connectés.

L'invention permet en outre d'ouvrir l'accès aux données produites par les objets connectés à de nouveaux acteurs du système (organisations/tenants), par exemple dans le cadre d'une collaboration ou d'une coalition, qui n'étaient pas forcément connus/prévus à l'initialisation du système, et ce sans avoir à modifier le comportement ou la configuration des objets connectés déjà en fonction.

À cet effet, l'invention a pour objet un procédé de contrôle d'accès selon la revendication 1.

Suivant d'autres caractéristiques de l'invention, le procédé de contrôle d'accès est selon l'une quelconque des revendications 2 à 6.

L'invention a également pour objet un procédé de distribution de données selon la revendication 7.

L'invention a également pour objet un procédé de réception de données selon la revendication 8.

L'invention a également pour objet un produit programme d'ordinateur selon la revendication 9.

Finalement, l'invention a pour objet également un système de contrôle d'accès selon la revendication 10.

Ces caractéristiques et avantages de l'invention apparaîtront à la lecture de la description qui va suivre, donnée uniquement à titre d'exemple non limitatif, et faite en référence aux dessins annexés, sur lesquels :
- [Fig 1] la figure 1 est une vue schématique d'une architecture d'échange de données entre une pluralité d'objets connectés et au moins un utilisateur, l'architecture d'échange comportant notamment un système de contrôle d'accès selon l'invention ;
- [Fig 2] la figure 2 est une vue schématique de l'un des objets connectés de la figure 1 ;
- [Fig 3] la figure 3 est un organigramme d'un procédé de contrôle d'accès selon l'invention, le procédé de contrôle d'accès étant mis en œuvre par le système de contrôle d'accès de la figure 1 ; et
- [Fig 4] la figure 4 est une vue schématique illustrant la mise en œuvre du procédé de contrôle d'accès de la figure 3.

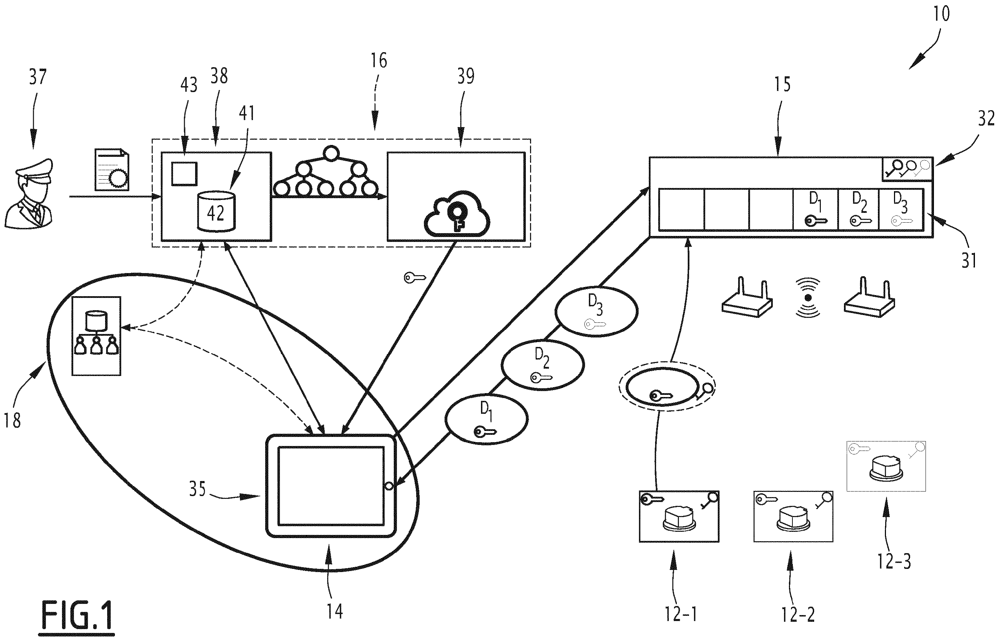

La figure 1 représente en effet une architecture 10 d'échange de données entre une pluralité d'objets connectés 12-1 à 12-3 et un utilisateur 14.

Bien entendu, de manière générale, l'architecture 10 peut comprendre un nombre quelconque d'objets connectés et d'utilisateurs.

Dans l'exemple de cette figure 1, l'architecture 10 comprend en outre un serveur applicatif 15, un système de contrôle d'accès 16 et un fournisseur d'identité 18.

Chacun des objets 12-1 à 12-3 est configuré pour générer et transmettre des données à distance via par exemple des signaux radioélectriques.

En particulier, chacun des objets est associé à un élément d'observation et apte à générer des données caractérisant cet élément d'observation.

Les données générées par chacun des objets 12-1 à 12-3 peuvent ainsi représenter la localisation de cet élément ou ses caractéristiques physiques telles que par exemple sa température, sa vitesse, etc.

Avantageusement, chaque objet 12-1 à 12-3 est associé à une pluralité de d'attributs permettant à différents utilisateurs d'accéder aux données issues de cet objet comme cela sera expliqué par la suite.

Les objets connectés 12-1 à 12-3 sont par exemple tous analogues entre eux.

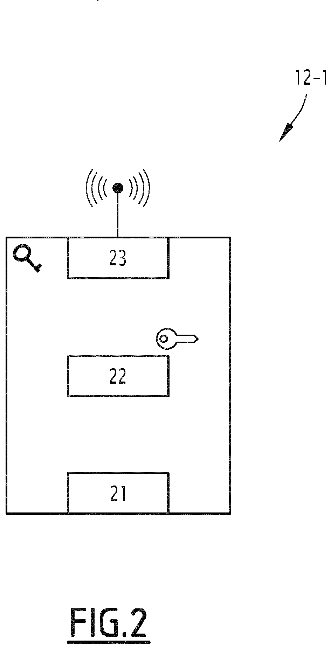

Ainsi, par la suite, seul l'objet 12-1 sera expliqué en détail en référence à la figure 2.

Comme cela est représenté sur la figure 2, l'objet connecté 12-1 comprend un module d'observation 21, un module de traitement 22 et un module de communication 23.

Le module d'observation 21 est apte à générer des données d'observation relatives à l'élément auquel cet objet connecté 12 est associé.

Le module de traitement 22 est apte à traiter les données d'observation issues du module d'observation 21 afin notamment de les chiffrer pour transmettre au moyen de signaux radioélectriques.

Notamment, le module de traitement 22 est apte à chiffrer les données issues du module d'observation 21 en utilisant au moins une clef de chiffrement fixe dont la signification sera expliquée par la suite.

Par « clef de chiffrement fixe », on entend une clef de chiffrement appliquée systématique pour chiffrer des données sortantes, indépendamment de la session de transmission lors de laquelle les données sont transmises. En particulier, une telle clef de chiffrement n'est par générée ou négociée pour une session donnée mais est appliquée à chaque session indépendamment du destinataire.

Selon un exemple de réalisation, le module de traitement 22 est apte à chiffrer l'ensemble des données issues du module d'observation 21 en utilisant une même clef de chiffrement fixe. Dans ce cas, il s'agit donc d'une clef de chiffrement unique.

Selon d'autres exemples, le module de traitement 22 est apte à chiffrer des données issues du module d'observation 21 en utilisant des clefs de chiffrement fixes différentes. Dans ce cas, l'application d'une clef de chiffrement fixe donnée est déterminée par exemple par la nature des données devant être chiffrées, par le temps de transmission ou par d'autres types de conditions externes ou internes de l'objet connecté.

Par la suite, pour des raisons de simplicité et selon un exemple non-limitatif, il sera considéré qu'une clef de chiffrement unique est utilisée par le module de traitement 22.

Cette clef de chiffrement est par exemple transmise au module de traitement 22 via par exemple le module de communication 23. Selon un autre exemple, cette clef de chiffrement est transmise au module de traitement 22 directement, par exemple lors d'une configuration initiale de l'objet connecté 12-1.

Le module de communication 23 est apte à communiquer notamment avec le serveur applicatif 15 en utilisant par exemple un protocole de transmission sécurisé.

En particulier, ce module 23 est apte à transmettre les données chiffrées par le module de traitement 22 à ce serveur applicatif 15 et à recevoir la clef de chiffrement transmise par ce serveur applicatif 15 ou directement par le système de contrôle d'accès 16, via ledit protocole de transmission sécurisé.

Ce protocole de transmission sécurisé comprend par exemple l'utilisation d'un chiffrement symétrique utilisant alors une clef symétrique.

Dans l'exemple décrit, ce protocole de transmission est par exemple un protocole de type LoRaWAN (de l'anglais « *Long Range Wide-Area Network »*)*.*

Ainsi, les données transmises par le module de communication 23 sont chiffrées tout d'abord par le module de traitement 22 en utilisant une clef de chiffrement qui est alors une clef asymétrique et puis, par une clef symétrique qui est générée en fonction du protocole de transmission utilisé.

Selon un autre exemple de réalisation, le module de communication 23 est apte à communiquer notamment avec le serveur applicatif 15 en utilisant tout autre protocole de transmission sécurisé. Ce protocole de transmission peut utiliser une clef symétrique pour mettre en œuvre une transmission sécurisée comme dans le cas précédent ou tout autre moyen pour mettre en œuvre une transmission sécurisée. En variante, ce protocole de transmission est un protocole de transmission non-sécurisée.

En variante ou en complément, le module de communication 23 est apte à diffuser des données par exemple en régime « broadcast », c'est-à-dire en régime de diffusion libre de sorte que ces données puissent être reçues directement par un terminal de l'utilisateur 14, sans passer par le serveur 15.

Le serveur applicatif 15 est connecté à l'ensemble des objets connectés 12-1 à 12-3 et permet de stocker dans son espace de stockage 31 l'ensemble des données chiffrées transmises par ces objets.

Pour ce faire, le serveur applicatif 15 comprend en outre un module de communication 32 qui est apte à communiquer avec chacun des modules de communication 23 des objets connectés via le protocole de transmission sécurisé décrit précédemment.

En particulier, dans le cas d'utilisation d'un protocole de transmission utilisant une clef symétrique, le module de communication 32 du serveur applicatif 15 est apte à établir une connexion avec chacun des modules de communication 23 des objets connectés en utilisant une clef symétrique propre à ce module de communication 23.

Dans l'exemple de la figure 1, l'utilisateur 14 est représenté par un terminal d'accès 35 utilisable alors par cet utilisateur 14 pour communiquer notamment avec le serveur applicatif 15 et le système de contrôle d'accès 16.

Ainsi, dans l'exemple représenté, ce terminal de communication présente une tablette ou un téléphone qui est alors connecté(e) au serveur applicatif 15 et au système de contrôle d'accès 16 via par exemple un réseau global tel que Internet.

En particulier, ce terminal d'accès 35 permet de recevoir des données chiffrées issues du serveur applicatif 15 en utilisant un protocole adapté.

En variante ou en complément, ce terminal d'accès 35 permet de recevoir directement des données chiffrées issues au moins de l'un des objets connectés, en utilisant un protocole adapté et sans passer par le serveur 15.

Le terminal d'accès permet en outre de déchiffrer au moins certaines des données chiffrées en utilisant une clef de déchiffrement comme cela sera expliqué par la suite.

Le système de contrôle d'accès 16 est géré par exemple par un administrateur 37 qui permet d'administrer l'accès aux objets connectés 12-1 à 12-3.

En particulier et comme cela est illustré sur la figure 1, le système de contrôle d'accès 16 comprend un serveur d'autorisation 38 et un serveur de gestion de clefs 39.

Le serveur d'autorisation 38 comprend une base de données 41 permettant de stocker une politique de contrôle d'accès 42 permettant aux utilisateurs d'accéder aux données issues des objets connectés 12-1 à 12-3.

En particulier, la politique de contrôle d'accès 42 comprend une pluralité de règles d'accès aux données issues des objets 12-1 à 12-3 par les utilisateurs.

Chaque règle est déterminée par exemple en fonction d'une pluralité d'attributs attribuables à un utilisateur et d'une pluralité d'attributs attribuables à chaque objet connecté 12-1 à 12-3.

En variante, chaque règle est déterminée pour chaque objet en fonction d'une pluralité d'attributs attribuables à un utilisateur.

Le serveur d'autorisation 38 comprend en outre un moteur de décision 43 permettant de générer une structure de contrôle d'accès pour chaque utilisateur en appliquant la politique de contrôle d'accès 42 en fonction des attributs de cet utilisateur.

Le moteur de décision 43 permet en outre de transmettre les structures de contrôle d'accès générées au serveur de gestion des clefs 39.

Ce moteur de décision 43 est par exemple mis en œuvre en utilisant la technologie de type ABAC (de l'anglais *« Attribute Based Access Control »*) signifiant « Contrôle d'accès basé sur attributs » en français.

Le serveur de gestion des clefs 39 permet d'une part de générer les clefs de chiffrement qui sont destinées aux objets connectés 12-1 à 12-3 et d'autre part, de générer des clefs de déchiffrement associées à ces clefs de chiffrement.

Les clefs de chiffrement sont distribuées par exemple directement aux objets 12-1 à 12-3 ou à travers le serveur applicatif 15, lors de la configuration de l'architecture 10. Ces clefs de chiffrement sont par exemple générées en fonction des attributs des objets 12-1 à 12-3.

Les clefs de déchiffrement sont générées en fonction des structures de contrôle d'accès fournies par le serveur d'autorisation 38 et sont ensuite distribuées aux utilisateurs correspondants.

Ces clefs de chiffrement et de déchiffrement sont générées notamment en utilisant la technologie ABE (de l'anglais *« Attribute Based Encryption »*) signifiant « Chiffrement basé sur attributs » en français.

Dans l'exemple de la figure 1, le système de contrôle d'accès 16 permet alors d'assurer l'accès aux données issues des objets connectés 12-1 à 12-3 par l'utilisateur 14 en mettant en œuvre un procédé de contrôle d'accès selon l'invention.

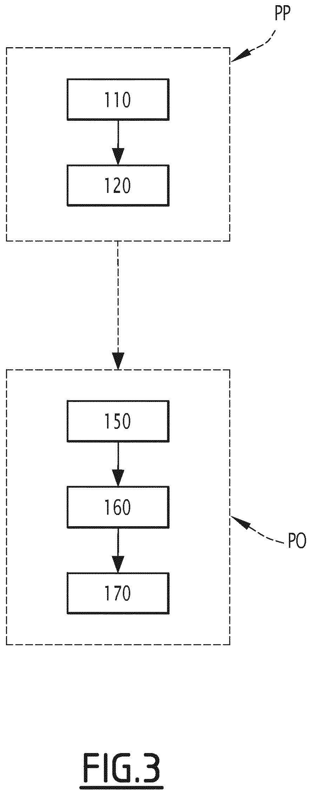

Ce procédé sera expliqué désormais en référence à la figure 3 présentant un organigramme de ses étapes.

En particulier, comme cela est visible sur la figure 3, le procédé de contrôle d'accès comprend une phase préliminaire PP et une phase opérationnelle PO.

Il est considéré initialement que des attributs sont attribués et transmis aux objets connectés 12-1 à 12-3.

La phase préliminaire PP est mise en œuvre par exemple lors d'une configuration initiale de l'architecture 10. Elle peut être également mise en œuvre à chaque réinitialisation de l'architecture 10.

La phase préliminaire PP comprend une étape initiale 110, lors de laquelle le serveur d'autorisation 38 détermine la politique de contrôle d'accès 42 aux objets connectés 12-1 à 12-3.

En particulier, lors de cette étape 110, le serveur d'autorisation 38 détermine alors à partir des instructions données par l'administrateur 37, une liste de règles permettant aux utilisateurs d'accéder aux données issues des objets connectés 12-1 à 12-3. Ces règles permettant l'accès ou non aux données issues de ces objets sont déterminés en fonction des attributs attribuables aux utilisateurs et des attributs attribuables aux objets et constituent ainsi la politique de contrôle d'accès 42.

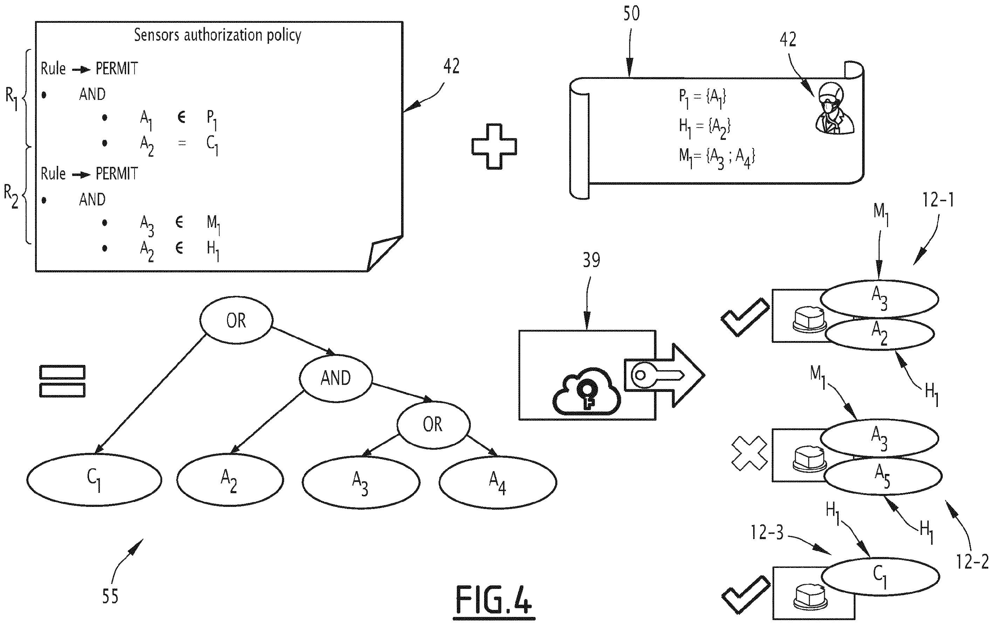

Un exemple d'une telle politique de contrôle d'accès 42 est représenté sur la figure 4.

Dans cet exemple, la politique 42 comprend une première règle R₁ déterminée pour au moins certains attributs attribués par exemple à l'objet connecté 12-3.

Selon cette règle R₁, l'accès aux données issues de l'objet 12-3 est autorisé lorsqu'un attribut A₁ fait partie d'un ensemble d'attributs P₁ et lorsqu'un attribut A₂ est égal à la caractéristique C₁.

L'attribut A₁ correspond par exemple à la fonction d'un utilisateur. Un ensemble d'attributs P₁ comprend dans ce cas un ensemble de fonctions pour lesquelles l'accès est autorisé.

L'attribut A₂ correspond par exemple à un niveau de confidentialité associé à un utilisateur. La caractéristique C₁ peut correspondre dans cette exemple au niveau non classifié de confidentialité.

Ainsi, la règle R₁ est remplie lorsque l'attribut A₁ appartient à l'ensemble P1, c'est-à-dire lorsque la fonction de l'utilisateur donné est comprise dans l'ensemble de fonctions P₁ et lorsque l'attribut A₂ est égal à la caractéristique C₁, c'est-à-dire lorsque le niveau de confidentialité A₂ de l'utilisateur correspond au moins au niveau non classifié.

De manière analogue, la règle R₂ peut régler l'accès ou non aux données issues par exemple de l'objet 12-1 via des attributs attribués à cet objet.

Ainsi, dans l'exemple représenté, la règle R₂ est remplie lorsqu'un attribut A₃ appartient à un ensemble M₁ et lorsque l'attribut A₂ appartient à un ensemble H₁.

L'attribut A₃ correspond par exemple à la mission de l'utilisateur et dans ce cas, l'ensemble M₁ comprend alors un ensemble de missions de l'utilisateur 14 pour lesquels l'accès est autorisé.

Dans cet exemple, l'attribut A₂ correspond également au niveau de confidentialité attribué à l'utilisateur. Dans ce cas, l'ensemble H₁ comprend l'ensemble de niveaux d'habilitation.

Lors de l'étape 120, le serveur de gestion de clefs génère une clef de chiffrement pour chacun des objets connectés 12-1 à 12-3 en utilisant notamment la politique de contrôle d'accès 42 et éventuellement les attributs de ces objets.

À l'issue de cette étape, les clefs de chiffrement sont alors transmises aux objets connectés 12-1 à 12-3.

La phase opérationnelle PO est mise en œuvre à chaque réception d'une demande d'obtention d'une clef de déchiffrement par un utilisateur pour déchiffrer des données issues d'un ou de plusieurs objets connectés 12-1 à 12-3.

Par la suite, cette phase opérationnelle PO sera expliquée dans l'hypothèse où l'utilisateur 14 ferait une demande d'une clef de déchiffrement permettant d'accéder aux données issues d'un ou de plusieurs objets 12-1 à 12-3.

Cette demande peut être faite par l'utilisateur 14 à la réception des données chiffrées issues des objets connectés correspondants, ou après la réception de celles-ci, ou avant la réception de celles-ci et même avant la génération de celles-ci par les objets correspondants.

Il est clair donc que cette phase PO sera mise en œuvre de manière analogue à la réception d'une demande analogue de la part de tout autre utilisateur y compris d'un nouvel utilisateur.

Selon un exemple de réalisation, une demande d'accès aux données issues des objets connectés est faite automatiquement lorsqu'un nouvel utilisateur devient identifiable par le système de contrôle d'accès 16 et n'est répétée par la suite qu'en cas par exemple d'une modification des clefs de chiffrement fixes pour les objets connectés.

En particulier, un utilisateur devient identifiable par le système de contrôle d'accès 16 lorsqu'il est enregistré dans le fournisseur d'identité 18.

Lors d'une étape initiale 150 de la phase opérationnelle PO, le serveur d'autorisation 38 identifie l'utilisateur 14 et lui attribue une pluralité d'attributs.

Cela est fait par exemple via un protocole de fédération d'identité prédéterminé en utilisant le fournisseur d'identité 18. Ce fournisseur d'identité 18 présente ainsi par exemple un tiers de confiance permettant d'authentifier l'utilisateur et de lui attribuer des attributs.

Cela permet alors de déterminer de manière sûre l'identité et les attributs de l'utilisateur.

La figure 4 illustre un ensemble de ces attributs 50 attribués par exemple à l'utilisateur 14.

Dans les notations du précédent exemple de la politique de contrôle d'accès 42, un ensemble d'attributs 50 est attribué lors de cette étape 150 à l'utilisateur 14.

Notamment, cet ensemble 50 comprend les définitions des ensembles P₁, H₁ et M₁ correspondant respectivement aux ensembles de fonctions, de niveaux d'habilitation et de missions de l'utilisateur 14.

Dans cet exemple, l'ensemble d'attributs 50 est défini de sorte que l'ensemble P₁ comprend l'attribut A₁, l'ensemble H₁ comprend l'attribut A₂ et l'ensemble M₁ comprend les attributs A₃ et A₄.

La validité de ces attributs est par exemple vérifiée en utilisant le fournisseur d'identité 18.

Lors de l'étape 160 suivante, le serveur d'autorisation 38 génère en utilisant son moteur de décision 43 une structure d'accès aux objets connectés par l'utilisateur 14 en fonction des attributs de cet utilisateur et de la politique de contrôle d'accès 42.

La figure 4 illustre un exemple d'une telle structure d'accès 55 générée en utilisant alors la politique de contrôle d'accès 42 et l'ensemble d'attributs 50 de l'utilisateur.

Ainsi, dans cet exemple, la structure d'accès 55 représente une structure arborescente composée des conditions logiques de type « OU » (« OR » en anglais) et « ET » (« AND » en anglais) pour chacun des attributs A₁ à A₄ de l'ensemble d'attributs 50.

Cette structure d'accès 55 est alors obtenue par une transposition de l'ensemble d'attributs 50 de l'utilisateur 14 sur la politique du contrôle d'accès 42.

Lors de l'étape 170 suivante, le serveur de gestion de clefs 39 génère une clef de déchiffrement à partir de la structure d'accès correspondant à l'utilisateur.

En particulier, cette clef de déchiffrement est générée de sorte à assurer le déchiffrage des données chiffrées par les clefs de chiffrement correspondants des objets connectés 12-1 à 12-3 aux données auxquelles l'utilisateur 14 a l'accès.

Cette clef de déchiffrement est alors générée en analysant la structure d'accès produite par le serveur d'autorisation 38.

Dans l'exemple de la figure 4, la clef de déchiffrement générée par le serveur de gestion de clefs 39 permet à l'utilisateur 14 d'accéder à l'objet connecté 12-1 qui requiert alors l'attribut A₃ pour l'ensemble de missions M₁ de l'utilisateur 14 et l'attribut A₂ pour l'ensemble d'habilitations H₁ de l'utilisateur 14.

Cette clef de déchiffrement générée par le serveur de gestion de clefs 39 permet également à l'utilisateur 14 d'accéder à l'objet connecté 12-3 qui requiert le niveau de confidentialité le plus bas C₁ qui est inférieur au niveau de confidentialité A₂ de l'utilisateur 14.

En revanche, cette clef ne permet à l'utilisateur 14 d'accéder aux données chiffrées issues de l'objet connecté 12-2 qui requiert le niveau de confidentialité A₅ qui est supérieur à celui A₂ de l'utilisateur 14.

Les procédés de distribution de données et de réception de données mises en œuvre respectivement par l'un des objets connectés 12-1 à 12-3 et par le terminal d'accès 35, seront désormais expliqués.

Ces procédés sont mis en œuvre simultanément avec le procédé du contrôle d'accès expliqué précédemment.

En particulier, lors d'une étape initiale du procédé de distribution de données mis en œuvres par exemple par l'objet connecté 12-1, celui-ci reçoit une clef de chiffrement issue du serveur de contrôle de clé 39.

Cette étape est alors mise en œuvre à la suite d'une mise en œuvre de la phase préliminaire PP et notamment de l'étape 120 du procédé de contrôle d'accès expliqué précédemment.

Les étapes suivantes du procédé de distribution de données sont par exemple mises en œuvre par l'objet connecté 12-1 à chaque nouvelle génération de données d'observation par le module d'observation 21.

En particulier, lors d'une première étape, le module de traitement 22 chiffre les données générées par le module d'observation 21 en utilisant la clef de chiffrement reçue précédemment.

Ensuite, lors d'une deuxième étape, le module d'émission 23 distribue les données chiffrées avec la clef de chiffrement via le protocole sécurisé en utilisant par exemple la clef symétrique déterminée lors de l'établissement de connexion avec le serveur applicatif 50 ou tout autre type de transmission.

À l'issue de ce procédé de distribution de données, l'ensemble de ces données sont par exemple stockées dans le serveur applicatif 15.

Le procédé de réception de données générées par l'objet connecté est mis en œuvre par le terminal d'accès 35 lorsque l'utilisateur 14 a besoin d'accéder aux données issues de cet objet connecté.

En particulier, lors d'une étape initiale, le terminal d'accès 35 envoie une demande d'obtention d'une clef de déchiffrement.

Comme expliqué précédemment, cette demande peut être générée à la réception des données chiffrées, après cette réception ou avant cette réception et même avec la génération des données pour les objets connectés correspondants.

Comme expliqué précédemment, cette demande est envoyée au système de contrôle d'accès 16 qui met alors en œuvre la phase opérationnelle PO pour cet utilisateur lors de laquelle ce système 16 authentifie l'utilisateur et ses attributs via notamment le fournisseur d'identité, et lui génère une clef de déchiffrement.

Lors de l'étape suivante, le terminal d'accès 35 reçoit alors une clef de déchiffrement générée par le serveur de contrôle de clefs 39 en fonction de la structure d'accès générée par le serveur d'autorisation 38 en utilisant les attributs de l'utilisateur 14.

Ensuite, lors d'une étape suivante, le terminal d'accès 35 réceptionne des données de la part du serveur applicatif 15 qui sont alors chiffrées par les capteurs correspondants.

En variante, lors de cette étape, le serveur applicatif 15 transmet l'ensemble des données chiffrées issues de l'ensemble des capteurs 12-1 à 12-3.

En variante, le terminal d'accès 35 reçoit directement ces données issues des capteurs 12-1 à 12-3 qui sont alors sont diffusées par ces objets en régime « broadcast », c'est-à-dire en régime de diffusion libre.

Ensuite, lors d'une étape suivante, le terminal d'accès 35 applique sa clef de déchiffrement à l'ensemble des données reçues de la part du serveur applicatif 15.

Le terminal d'accès 35 applique donc cette clef à chacune des données reçues et lorsqu'il réussit à déchiffrer les données transmises par sa clef de déchiffrement, il accède aux données demandées.

Cela signifie que le terminal d'accès 35 est en mesure de déchiffrer uniquement les données auxquelles l'utilisateur 14 peut avoir l'accès.

On conçoit alors que la présente invention présente un certain nombre d'avantages.

Tout d'abord, comme cela a été vu précédemment, l'invention permet d'assurer une gestion fine des droits d'accès aux informations issues des objets connectés.

En particulier, il est possible d'associer aux utilisateurs une pluralité d'attributs et en fonction de ces attributs, de donner ou non l'accès aux données issues des objets connectés à ces utilisateurs.

Cela permet alors de gérer le droit d'accès des utilisateurs de manière dynamique et notamment des utilisateurs enregistrés après la mise en œuvre l'architecture 10. En ce qui concerne les objets connectés, ils communiquent à travers un serveur spécialisé ou directement avec les terminaux d'accès des utilisateurs ce qui permet de ne transmettre l'ensemble des données qu'une seule fois indépendamment du nombre d'utilisateurs requérant ces données.

De plus, ces données sont chiffrées en utilisant uniquement une ou plusieurs clefs de chiffrement sans gestion des droits d'accès spécifiques en fonction des utilisateurs.

C'est en effet la nature des clés de déchiffrement destinées aux utilisateurs qui permet de déchiffrer ou non les données chiffrées par ces objets en fonction de droits d'accès donnés aux utilisateurs.

En outre, l'emploi d'un protocole de fédération d'identité pour l'authentification des utilisateurs et l'obtention d'attributs, ainsi que d'un paradigme de contrôle d'accès tel que défini par le module de décision (« ABAC » par exemple) pour la politique de contrôle d'accès 42, permettent un couplage faible entre les acteurs de l'architecture (utilisateurs et objets) et les clés de chiffrement/déchiffrement. Le couplage se fait par la détention d'attributs de part et d'autre à partir desquels sont dérivées des clés de chiffrement et de déchiffrement.

Cela permet donc de venir dynamiquement ajouter de nouveaux utilisateurs et surtout de nouveaux tenants (possédant leur propre fournisseur d'identité et référentiel d'attributs, compatible avec le protocole de fédération d'identité utilisée) dans une architecture déjà déployée, sans avoir le moindre impact sur les objets en fonction et leur manière de fonctionner et protéger les données.

Cela permet en outre de reconfigurer facilement les objets connectés pour être par exemple utilisés par un nouvel administrateur 37.

En effet, pour cela il suffit de remplacer les clefs de chiffrement transmises précédemment à ces objets par de nouvelles clefs de chiffrement.

Cela permet alors de réutiliser les objets connectés.

## Revendications

1. Procédé de contrôle d'accès à des données issues d'une pluralité d'objets connectés (12-1,...,12-3) à ressources contraintes, par une pluralité d'utilisateurs (14) ;
le procédé comprenant une phase préliminaire (PP) et une phase opérationnelle (PO) ;
la phase préliminaire (PP) comprenant les étapes suivantes :
- détermination (110) d'une politique de contrôle d'accès (42) permettant de contrôler l'accès aux objets connectés (12-1, ...,12-3) ;
- attribution (120) d'au moins une clef de chiffrement fixe à chaque objet connecté (12-1, ...,12-3), la ou chaque clef de chiffrement fixe étant déterminée en fonction de la politique de contrôle d'accès (42) et destinée à être utilisée pour chiffrer au moins certaines des données issues de cet objet (12-1, ...,12-3) ;
la phase opérationnelle (PO) étant mise en oeuvre à la réception d'une demande par un utilisateur (14) pour accéder aux données issues d'un ou de plusieurs objets connectés (12-1, ...,12-3), et comprenant les étapes suivantes :
- authentification (150) dudit utilisateur (14) et attribution à cet utilisateur (14) d'une pluralité d'attributs (50) le caractérisant ;
- génération d'une structure d'accès (55) aux objets connectés (12-1, ...,12-3) en fonction des attributs (50) dudit utilisateur (14) et de la politique de contrôle d'accès (42) ;
- génération d'une clef de déchiffrement à partir de la structure d'accès (55) correspondant à cet utilisateur (14), la clef de déchiffrement étant destinée à être utilisée pour déchiffrer au moins certaines des données issues d'au moins un objet connecté (12-1, ...,12-3).

2. Procédé de contrôle d'accès selon la revendication 1, dans lequel la phase préliminaire (PP) est mise en oeuvre lors d'une configuration initiale des objets connectés (12-1, ...,12-3).

3. Procédé de contrôle d'accès selon la revendication 1 ou 2, dans lequel la politique de contrôle d'accès (42) définit au moins une règle d'accès (R₁, R₂) à des données issues d'un ou de plusieurs objets connectés (12-1, ...,12-3) en fonction d'une pluralité d'attributs attribuables à un utilisateur (14) et d'une pluralité d'attributs attribuables à cet ou ces objets connectés (12-1, ...,12-3).

4. Procédé de contrôle d'accès selon la revendication 3, dans lequel chaque clef de chiffrement fixe est générée en utilisant une technique de chiffrement par attributs.

5. Procédé de contrôle d'accès selon l'une quelconque des revendications précédentes, dans lequel chaque structure de contrôle d'accès (42) est générée par un moteur de décision (43) utilisant un contrôle d'accès basé sur attributs.

6. Procédé de contrôle d'accès selon l'une quelconque des revendications précédentes, dans lequel l'authentification de chaque utilisateur (14) est effectuée par un server d'autorisation (38) via un protocole de fédération d'identité.

7. Procédé de distribution de données générées par un objet connecté (12-1,, ...,12-3) à ressources contraintes, comprenant les étapes suivantes :
- réception d'au moins une clef de chiffrement à la suite d'une mise en oeuvre de la phase préliminaire (PP) du procédé de contrôle d'accès selon l'une quelconque des revendications précédentes ;
- chiffrement des données générées en utilisant la clef de chiffrement reçu ;
- distribution des données chiffrées ;
les données chiffrées étant destinées à être reçues par au moins un utilisateur (14) ayant une clef de déchiffrement permettant de déchiffrer ces données chiffrées et générées à la suite d'une mise en oeuvre de la phase opérationnelle (PO) du procédé de contrôle d'accès selon l'une quelconque des revendications précédentes.

8. Procédé de réception de données générées par un objet connecté (12-1, ...,12-3) à ressources contraintes, lesdites données étant chiffrées par ledit objet connecté (12-1, ...,12-3) en utilisant une clef de chiffrement reçue à la suite d'une mise en oeuvre de la phase préliminaire (PP) du procédé de contrôle d'accès selon l'une quelconque des revendications précédentes ;
le procédé comprenant les étapes suivantes :
- envoi d'une demande d'accès ;
- réception d'une clef de déchiffrement à la suite d'une mise en œuvre de la phase opérationnelle du procédé de contrôle d'accès selon l'une quelconque des revendications 1 à 6 ;
- réception desdites données ;
- déchiffrage des données reçues en utilisant la clef de déchiffrement reçue.

9. Produit programme d'ordinateur comportant des instructions logicielles qui, lorsque mises en œuvre par un équipement informatique, mettent en œuvre le procédé de contrôle d'accès selon l'une quelconque des revendications 1 à 6.

10. Système de contrôle d'accès (16) à des données issues d'une pluralité d'objets connectés (12-1, ...,12-3) comportant des moyens techniques configurés pour mettre en œuvre le procédé de contrôle d'accès, selon l'une quelconque des revendications 1 à 6.

## Patentansprüche

1. Verfahren zur Steuerung des Zugriffs auf Daten, die von einer Vielzahl von verbundenen Objekten (12-1, ..., 12-3) mit beschränkten Ressourcen stammen, durch eine Vielzahl von Benutzern (14);
wobei das Verfahren eine Vorphase (PP) und eine Betriebsphase (PO) umfasst; die Vorphase (PP), die die folgenden Schritte umfasst:
- Bestimmen (110) einer Zugriffskontrollpolitik (42), die es ermöglicht, den Zugriff auf die verbundenen Objekte (12-1, ..., 12-3) zu kontrollieren;
- Zuweisen (120) von mindestens einem festen Chiffrierschlüssel an jedes verbundene Objekt (12-1, ..., 12-3), wobei der oder jeder feste Chiffrierschlüssel in Abhängigkeit von der Zugriffskontrollpolitik (42) bestimmt wird und dazu bestimmt ist, verwendet zu werden, um zumindest einige der von diesem Objekt (12-1, ...,12-3) stammenden Daten zu verschlüsseln.
wobei die Betriebsphase (PO) beim Empfangen einer Anfrage durch einen Benutzer (14) für den Zugriff auf Daten aus einem oder mehreren verbundenen Objekten (12-1, ...,12-3) durchgeführt wird und die folgenden Schritte umfasst:
- Authentifizierung (150) des Benutzers (14) und Zuweisen einer Vielzahl von ihn charakterisierenden Attributen (50) an diesen Benutzer (14);
- Erzeugen einer Zugriffsstruktur (55) auf die verbundenen Objekte (12-1, ..., 12-3) in Abhängigkeit von den Attributen (50) des Benutzers (14) und der Zugriffskontrollpolitik (42);
- Erzeugen eines Entschlüsselungsschlüssels aus der Zugriffsstruktur (55), die diesem Benutzer (14) entspricht, wobei der Entschlüsselungsschlüssel dazu bestimmt ist, verwendet zu werden, um zumindest einige der Daten zu entschlüsseln, die von mindestens einem verbundenen Objekt (12-1, ...,12-3) stammen.

2. Verfahren zur Steuerung des Zugriffs nach Anspruch 1, wobei die Vorphase (PP) während einer anfänglichen Konfiguration der verbundenen Objekte (12-1, ...,12-3) durchgeführt wird.

3. Verfahren zur Steuerung des Zugriffs nach Anspruch 1 oder 2, bei dem die Zugriffskontrollpolitik (42) mindestens eine Zugriffsregel (R₁, R₂) auf Daten definiert, die von einem oder mehreren verbundenen Objekten (12-1, ...,12-3) stammen, in Abhängigkeit von einer Vielzahl von Attributen, die einem Benutzer (14) zuzuordnen sind, und einer Vielzahl von Attributen, die diesem oder diesen verbundenen Objekten (12-1, ...,12-3) zuzuordnen sind.

4. Verfahren zur Steuerung des Zugriffs nach Anspruch 3, wobei jeder feste Chiffrierschlüssel unter Verwendung einer attributbasierten Verschlüsselungstechnik erzeugt wird.

5. Verfahren zur Steuerung des Zugriffs nach einem der vorhergehenden Ansprüche, wobei jede Zugriffskontrollstruktur (42) von einer Entscheidungsmaschine (43) unter Verwendung einer attributbasierten Zugriffskontrolle erzeugt wird.

6. Verfahren zur Steuerung des Zugriffs nach einem der vorhergehenden Ansprüche, wobei die Authentifizierung jedes Benutzers (14) durch einen Autorisierungsserver (38) über ein Identitätsföderationsprotokoll erfolgt.

7. Verfahren zur Verteilung von Daten, die von einem verbundenen Objekt (12- 1, ..., 12-3) mit beschränkten Ressourcen erzeugt werden, mit den folgenden Schritten:
- Empfangen mindestens eines Chiffrierschlüssels nach einer Durchführung der Vorphase (PP) des Verfahren zur Steuerung des Zugriffs nach einem der vorhergehenden Ansprüche;
- Verschlüsselung der erzeugten Daten unter Verwendung des erhaltenen Chiffrierschlüssels;
- Verteilung von Zahlenmaterial;
wobei die verschlüsselten Daten dazu bestimmt sind, von mindestens einem Benutzer (14) empfangen zu werden, der einen Entschlüsselungsschlüssel besitzt, der es ermöglicht, diese verschlüsselten Daten zu entschlüsseln. Diese Daten werden nach der Durchführung der Betriebsphase (PO) des Verfahrens zur Steuerung des Zugriffs nach einem der vorhergehenden Ansprüche erzeugt.

8. Verfahren zum Empfangen von Daten, die von einem verbundenen Objekt (12-1, ...,12-3) mit beschränkten Ressourcen erzeugt werden, wobei die Daten von dem verbundenen Objekt (12-1, ...,12-3) unter Verwendung eines Chiffrierschlüssels verschlüsselt werden, der nach einer Durchführung der Vorphase (PP) des Verfahrens zur Steuerung des Zugriffs nach einem der vorhergehenden Ansprüche empfangen wurde;
wobei das Verfahren die folgenden Schritte umfasst:
- Senden einer Zugriffsanfrage;
- Empfangen eines Entschlüsselungsschlüssels nach einer Durchführung der Betriebsphase des Verfahrens zur Steuerung des Zugriffs nach einem der Ansprüche 1 bis 6;
- Empfangen der genannten Daten;
- Entschlüsselung der empfangenen Daten unter Verwendung des empfangenen Entschlüsselungsschlüssels.

9. Computerprogrammprodukt, das Softwareanweisungen umfasst, die, wenn sie von einer Rechenvorrichtung implementiert werden, das Verfahren zur Steuerung des Zugriffs nach einem der Ansprüche 1 bis 6 implementieren.

10. System zur Zugriffskontrolle (16) auf Daten, die von einer Vielzahl von verbundenen Objekten (12-1, ..., 12-3) stammen, mit technischen Mitteln, die zur Durchführung des Verfahrens zur Steuerung des Zugriffs konfiguriert sind, nach einem der Ansprüche 1 bis 6.

## Claims

1. A method for controlling access to data from several connected objects (12-1, ..., 12-3) with limited resources, by a plurality of users (14);
the process comprising a preliminary phase (PP) and an operational phase (PO); the preliminary phase (PP) comprising the following stages:
- determination (110) of an access control policy (42) for controlling access to connected objects (12-1, ..., 12-3);
- allocation (120) of at least one fixed encryption key to each connected object (12-1, ..., 12-3), the or each fixed encryption key being determined as a function of the access control policy (42) and intended to be used to encrypt at least some of the data from this object (12-1, ..., 12-3);
the operational phase (PO) being implemented on receipt of a request by a user (14) to access data from one or more connected objects (12-1, ..., 12-3), and comprising the following steps:
- authentication (150) of said user (14) and allocation to this user (14) of a plurality of attributes (50) characterising them;
- generation of an access structure (55) to the connected objects (12-1, ..., 12-3) as a function of the attributes (50) of said user (14) and the access control policy (42);
- generation of a decryption key from the access structure (55) corresponding to this user (14), the decryption key being intended to be used to decrypt at least some of the data coming from at least one connected object (12-1, ..., 12-3).

2. An access control method according to claim 1, wherein the preliminary phase (PP) is implemented during an initial configuration of the connected objects (12-1, ..., 12-3).

3. An access control method according to claim 1 or 2, in which the access control policy (42) defines at least one access rule (R₁, R₂) to data from one or more connected objects (12-1, ..., 12-3) as a function of a plurality of attributes attributable to a user (14) and several attributes that are attributable to this or these connected objects (12-1, ..., 12-3).

4. The access control method of claim 3, wherein each fixed encryption key is generated using an attribute encryption technique.

5. An access control method according to any of the preceding claims, wherein each access control structure (42) is generated by a decision engine (43) using attribute-based access control.

6. An access control method according to any one of the preceding claims, in which the authentication of each user (14) is carried out by an authorisation server (38) via an identity federation protocol.

7. A method of distributing data generated by a connected object (12-1, ..., 12-3) with constrained resources, comprising the following steps:
- reception of at least one encryption key following implementation of the preliminary phase (PP) of the access control method according to any one of the preceding claims;
- encryption of the data generated using the encryption key that is received;
- distribution of encrypted data;
the encrypted data being intended to be received by at least one user (14) having a decryption key enabling these encrypted data to be decrypted and generated following implementation of the operational phase (PO) of the access control method according to any one of the preceding claims.

8. A method of receiving data generated by a resource-constrained connected object (12-1, ..., 12-3), said data being encrypted by said connected object (12-1, ..., 12-3) using an encryption key received following implementation of the preliminary phase (PP) of the access control method according to any one of the preceding claims;
the method comprising the following steps:
- sending an access request;
- reception of a decryption key following implementation of the operational phase of the access control method according to any one of claims 1 to 6;
- reception of said data;
- decrypting the received data using the received decryption key.

9. A computer programme product comprising software instructions which, when implemented by computer equipment, implement the access control method according to any one of claims 1 to 6.

10. A system (16) for controlling access to data from several connected objects (12-1, ..., 12-3) comprising technical means configured to implement the access control method, according to any one of claims 1 to 6.
